# EUROPÄISCHE PATENTSCHRIFT

(11) **EP 3 512 752 B1**
(45) Veröffentlichungstag und Bekanntmachung des Hinweises auf die Patenterteilung: **25.12.2024**
(21) Anmeldenummer: 17777188.8
(22) Anmeldetag: 14.09.2017
(51) Int. Cl.: B62B 7/06, B62B 7/08, B62B 5/06

(54) **KINDERWAGENGESTELL UND KINDERWAGEN**
PERAMBULATOR FRAME AND PERAMBULATOR
CADRE DE POUSSETTE ET POUSSETTE

(30) Priorität: 15.09.2016 DE 202016105140 U; 14.02.2017 DE 202017100792 U
(43) Veröffentlichungstag der Anmeldung: 24.07.2019
(73) Patentinhaber: CYBEX GmbH, 95448 Bayreuth (DE)
(72) Erfinder: KIESLER, Franz, 95448 Bayreuth (DE); HOLLEIS, Ralf, 95448 Bayreuth (DE); HÄUSER, Johannes, 95448 Bayreuth (DE); BARKER, Jason, 95448 Bayreuth (DE)
(74) Vertreter: Meissner Bolte Partnerschaft mbB
(86) Internationale Anmeldenummer: PCT/EP2017/073091
(87) Internationale Veröffentlichungsnummer: WO 2018/050728

(56) Entgegenhaltungen:
- DE-A1- 102014 110 215
- DE-U1- 202005 008 369
- DE-U1- 202007 011 019
- US-A1- 2009 020 984
- US-A1- 2010 308 550
- US-A1- 2013 113 185

## Beschreibung

Die Erfindung betrifft ein Kinderwagengestell sowie einen Kinderwagen.

Ein faltbares Kinderwagengestell ist beispielsweise aus DE 10 2014 110 215 A1 bekannt. Kinderwagengestelle der hier angesprochenen Art, insbesondere Kindersportwagengestelle, Buggys oder dergleichen Fahrzeuge für Kinder dienen dem praktischen Transport von Babys und Kleinkindern. Problematisch bei den bekannten Kinderwagengestellen ist häufig der Platzbedarf im Nichtbenutzungszustand. Insbesondere beim Transport ist es von Vorteil, wenn der Wagen zusammengefaltet werden kann, wobei die Umwandlung des Kinderwagengestells so einfach wie möglich für einen Benutzer vonstattengehen sollte.

Im Stand der Technik werden verschiedene Faltmechanismen, die das Gestell des Kinderwagens von einem Gebrauchszustand in einen Aufbewahrungszustand überführen, vorgeschlagen. Zumindest im Gebrauchszustand (der Gebrauchsstellung) muss der Kinderwagen gegen ein unbeabsichtigtes Auslösen des Faltmechanismus gesichert werden. Gegebenenfalls kann auch für die Aufbewahrungsstellung (den Aufbewahrungszustand) eine Sicherung vorgesehen sein.

Faltbare Kinderwägen weisen üblicherweise ein Gelenk auf, in dem beispielsweise ein Schieber und vordere Beine und/oder hintere Beine gegeneinander rotieren können oder in Bezug auf ihre Stellung fixiert werden können. Sofern eine Sicherung für den Aufbewahrungszustand vorgesehen ist, ist dieser oftmals durch einen eigenständigen Mechanismus realisiert.

Die DE 20 2005 008 369 U1 offenbart beispielsweise einen Stroller, der zwischen einem auseinandergeklappten Zustand und einem zusammengeklappten Zustand geklappt werden kann.

Die US 2009/0020984 A1 offenbart beispielsweise einen zusammenklappbaren Kinderwagen und insbesondere einen einhändig zu betätigenden Betätigungsmechanismus für einen zusammenklappbaren Kinderwagen.

Die DE 20 2007 011 019 U1 offenbart beispielsweise einen Klapp-Sportkinderwagen, insbesondere einen Klapp-Sportkinderwagen mit einem Paar klappbarer und im Winkel einstellbarer Schiebearme zum Zusammenklappen des Sportkinderwagens.

Die US 2010/0308550 A1 offenbart einen Kinderwagen, der einen zusammenklappbaren Radrahmen mit einer verriegelbaren Schwenkbasis zur schwenkbaren Abstützung eines faltbaren oberen Rahmens und einen an dem faltbaren oberen Rahmen angebrachten Entriegelungsmechanismus zur Betätigung des Zusammenklappens des zusammenklappbaren Radrahmens und des faltbaren oberen Rahmens aufweist.

Die bekannten Faltmechanismen werden jedoch als insgesamt nachteilhaft angesehen. Insbesondere werden mehrere separate Operationen des Benutzers benötigt, um den Kinderwagen von seinem Gebrauchszustand in den Aufbewahrungszustand (bzw. umgekehrt) zu überführen, beispielsweise als erste Operation ein seitliches Entriegeln der Gebrauchsstellung und als zweite Operation ein Zusammenklappen des Gestells, ggf. mit einem automatischen Einrasten im Aufbewahrungszustand - oder als erste Operation ggf. ein seitliches Entriegeln des Aufbewahrungszustandes und als zweite Operation ein Aufklappen des Gestells mit einem ggf. automatischen Einrasten in der Gebrauchsstellung.

Insoweit im Aufbewahrungszustand keine Sicherung vorgesehen ist, kann das Gestell unbeabsichtigt aufklappen (beispielsweise beim Einladen in den Kofferraum eines Autos). Weiterhin kann der Faltmechanismus üblicherweise nicht mit einer Hand bedient werden, beispielsweise muss zunächst eine seitliche Entriegelung des Gebrauchszustandes (gleichzeitig auf beiden Seiten) erfolgen und daraufhin ein Faltvorgang - oder zunächst eine Entriegelung des Aufbewahrungszustandes mit einer Hand und gleichzeitiges Aufklappen des Gestells mit der anderen Hand.

Es ist daher Aufgabe der Erfindung, einen Kinderwagen bzw. ein entsprechendes Kinderwagengestell bereitzustellen, wobei das Gestell auf einfache Art und Weise faltbar sein soll und eine Sicherung sowohl der Gebrauchs- als auch der Aufbewahrungsstellung auf einfache Art und Weise möglich sein soll.

Zur Lösung der oben genannten Aufgabe wird ein Kinderwagengestell mit den Merkmalen des Anspruches 1 vorgeschlagen. Bevorzugte Ausführungsformen sind in den abhängigen Ansprüchen definiert.

Insbesondere wird die Aufgabe gelöst durch ein faltbares Kinderwagengestell, insbesondere Kindersportwagengestell, Buggy-Gestell oder dergleichen Fahrzeuggestell für Kinder, wobei das Kinderwagengestell mit Rädern sowie mit einem Schieber zum Schieben des Kinderwagengestells ausgestattet ist, und ggf. mit Befestigungsmitteln zum Befestigen eines Kinderwagenaufsatzes, wobei das Kinderwagengestell in einen arretierten Gebrauchszustand sowie in einen zusammengefalteten arretierten Aufbewahrungszustand verbracht werden kann, wobei eine, insbesondere manuelle, Betätigungsvorrichtung vorgesehen und derart ausgebildet ist, dass bei einer Überführung vom arretierten Gebrauchszustand in den arretierten Aufbewahrungszustand mindestens zwei Arretiervorgänge (insbesondere Falt- und/oder Arretiervorgänge), nämlich sowohl ein Lösen der Arretierung im Gebrauchszustand als auch ein Einstellen einer Arretierung im Aufbewahrungszustand, durch eine einzige erste Betätigung der Betätigungseinrichtung durchgeführt werden, wobei bei einer Überführung von dem arretierten Aufbewahrungszustand in den arretierten Gebrauchszustand ein Arretiervorgang, nämlich ein Lösen der Arretierung in dem Aufbewahrungszustand, durch eine einzige zweite Betätigung der Betätigungseinrichtung durchgeführt wird, wobei die zweite Betätigung vorzugsweise eine Betätigung ohne Bewegungsumkehr ist und/oder wobei die zweite Betätigung vorzugsweise eine kinematische Umkehr der ersten Betätigung darstellt.

Unter einer (manuellen) Betätigungseinrichtung ist insbesondere eine Betätigungseinrichtung zu verstehen, die durch den Benutzer (ohne den Kinderwagen auseinanderzunehmen) erreichbar ist und vom Benutzer (manuell) betätigt werden kann. Unter einer manuellen Betätigung ist insbesondere eine Betätigung per Hand und/oder Fuß zu verstehen. Die Betätigungseinrichtung bildet insbesondere ein (einstückiges) Betätigungselement, wie beispielsweise einen Bügel oder einen Hebel. Unter einer einzigen Betätigung der Betätigungseinrichtung ist insbesondere ein Vorgang zu verstehen, bei dem der Benutzer die Betätigungseinrichtung einmal bedient (insbesondere bewegt). Unter einem Aufbewahrungszustand ist insbesondere ein Zustand zu verstehen, bei dem ein vorderes und ein hinteres Bein bzw. vorderes und hinteres Beinpaar aufeinander zu bewegt (zu rotiert) sind und/oder der Schieber in Richtung eines vorderen Beines (Beinpaares) hin bewegt (hin rotiert) ist (ausgehend vom Gebrauchszustand).

Ein Kernaspekt der Erfindung liegt darin, dass das Kinderwagengestell in jeweils einer (einzigen) Operation aus einer verriegelten (arretierten) Gebrauchs- in eine verriegelte (arretierte) Aufbewahrungsstellung und ggf. zurück gebracht werden kann. In einem Faltgelenk (zur Faltung des Kinderwagengestells) können in dieser einen Operation ggf. mehrere Vorgänge gleichzeitig, zeitlich überlappend oder zeitlich nacheinander ausgelöst werden. Konkret können beispielsweise das Vorspannen einer Arretierungseinrichtung für eine Arretierung der Aufbewahrungsstellung (des Aufbewahrungszustandes) sowie die Entsicherung einer Arretierung (Verriegelung) der Gebrauchsstellung (des Gebrauchszustandes) erfolgen. Die Betätigung ist insbesondere eine (rein) translatorische und/oder (rein) rotatorische Bewegung oder eine Kombination davon. Bei einer Betätigung kehrt sich bei einer Rotation der Drehsinn und/oder bei einer Translation die Richtung vorzugsweise nicht um. Vorzugsweise ist die erste Betätigung eine Betätigung ohne Bewegungsumkehr.

Insgesamt wird durch das erfindungsgemäße faltbare Kinderwagengestell erreicht, dass das Überführen vom Gebrauchszustand in den Aufbewahrungszustand auf einfache Art und Weise erfolgen kann und dennoch eine sichere Benutzung des Kinderwagengestells ermöglicht wird. Insbesondere ist ein Faltvorgang mit einer (einzigen) Operation (ggf. einhändig) durchführbar, wobei unter einer derartigen Operation vorzugsweise ein durchgehender Bewegungsablauf (ohne Absetzen oder Umgreifen) verstanden werden soll.

Bei einer Überführung von dem arretierten Aufbewahrungszustand in den arretierten Gebrauchszustand wird ein Arretiervorgang, insbesondere ein Lösen der Arretierung in dem Aufbewahrungszustand, durch eine einzige zweite Betätigung der Betätigungseinrichtung durchgeführt. Die zweite Betätigung ist vorzugsweise eine Betätigung ohne Bewegungsumkehr. Zusätzlich oder alternativ kann die zweite Betätigung eine kinematische Umkehr der ersten Betätigung darstellen. Unter einer kinematischen Umkehr ist insbesondere (bei rotatorischer Betätigung) ein Zurückdrehen zu verstehen oder (bei translatorischer Betätigung) ein Zurückbewegen. Vorteilhafterweise ist auch das Aufklappen aus dem Aufbewahrungszustand in den Gebrauchszustand in einer Operation (vorzugsweise einhändig) durchführbar.

Unter dem Einstellen einer Arretierung ist insbesondere ein Vorgang zu verstehen, bei dem der jeweilige Zustand arretiert ist, wenn er eingenommen wird. Das Einstellen der Arretierung kann also insbesondere auch vor dem Einnehmen des jeweiligen Zustandes erfolgen, beispielsweise durch Vorspannen einer Vorspanneinrichtung (insbesondere Feder). Das ausschließliche Verbringen in den jeweiligen Zustand soll vorzugsweise nicht als Betätigung verstanden werden. Unter einer (ersten bzw. zweiten) Betätigung ist also insbesondere ein Vorgang zu verstehen, bei dem das Auslösen einer Arretierung oder das Aufheben einer Arretierung aktiv gesteuert wird (durch den Benutzer).

Die Betätigungseinrichtung kann so konfiguriert sein, dass die erste Betätigung zur Folge hat, dass das Lösen der Arretierung im Gebrauchszustand und das Einstellen der Arretierung im Aufbewahrungszustand zumindest abschnittsweise zeitlich überlappt, insbesondere gleichzeitig erfolgt, oder zeitlich nacheinander (ggf. in zeitlichem Abstand) erfolgt. Alternativ oder zusätzlich kann die Betätigungseinrichtung so konfiguriert sein, dass die zweite Betätigung zur Folge hat, dass das Lösen der Arretierung im Aufbewahrungszustand und (falls realisiert) das Einstellen der Arretierung im Gebrauchszustand zumindest abschnittsweise zeitlich überlappt, insbesondere gleichzeitig erfolgt, oder zeitlich nacheinander (insbesondere in einem zeitlichen Abstand) erfolgt.

In einer konkreten Ausführungsform ist die Betätigungseinrichtung zur Durchführung der ersten und/oder zweiten Betätigung verschwenkbar. Dabei ist die zweite Betätigung vorzugsweise ein Zurückverschwenken der Verschwenkung in Form der ersten Betätigung. Eine Betätigung durch Verschwenkung vergleichsweise wenig störanfällig (z.B. im Vergleich zu Teleskoplösungen), insbesondere vergleichsweise tolerant gegenüber Schmutzeintrag. Auch sind vergleichsweise große Toleranzen in der Herstellung hinnehmbar, ohne dass die Funktionalität in erheblichem Maße eingeschränkt wird. Insgesamt wird dadurch eine zuverlässige und äußerst einfache Art und Weise der Bedienung des faltbaren Kinderwagengestells realisiert.

Die Betätigungseinrichtung kann ein Bestandteil eines Schiebers sein und/oder ein Bügel, insbesondere Schieberbügel, sein (oder einen solchen umfassen) und/oder ein Hebel sein (oder einen solchen umfassen) und/oder eine Klappe sein (oder eine solche umfassen). Alternativ oder zusätzlich kann mindestens ein Schieberabschnitt des Schiebers zur Höhenverstellung eines Griffes verschwenkbar sein, insbesondere in verschiedenen Schwenkpositionen arretierbar sein. Insgesamt wird die Bedienung des Faltmechanismus weiter vereinfacht.

Die Betätigungseinrichtung kann mit einer Verstelleinrichtung, vorzugsweise über ein Zugelement, insbesondere Bowdenzug, zusammenwirken, wobei die Verstelleinrichtung mindestens in eine erste und eine zweite Stellung einstellbar ist, wobei der Gebrauchszustand in der ersten Stellung arretiert ist und/oder eine Arretierung des Aufbewahrungszustandes in der ersten Stellung gelöst ist und/oder wobei der Aufbewahrungszustand in der zweiten Stellung arretiert ist und/oder eine Arretierung des Gebrauchszustandes in der zweiten Stellung gelöst ist. Die Verstelleinrichtung bewegt sich vorzugsweise translatorisch, ggf. rein translatorisch, bei einem Übergang von der ersten in die zweite Stellung. Besonders bevorzugt ist die Betätigungseinrichtung in diesem Fall durch (ggf. ausschließlich) rotatorisches Verschwenken betätigbar. Dadurch wird auf einfache Art und Weise ein zuverlässig funktionierendes Falten des Kinderwagengestells ermöglicht.

Die Verstelleinrichtung kann eine erste Wirkübertragungseinrichtung, insbesondere eine erste Anlaufschräge, umfassen derart, dass ein erstes Riegelelement bei einem Überführen von der ersten Stellung in die zweite Stellung im Gebrauchszustand, insbesondere gegen die Wirkung einer Spanneinrichtung, vorzugsweise Feder, aus einer Riegelaufnahme bewegt wird. Alternativ oder zusätzlich kann die Verstelleinrichtung eine zweite Wirkübertragungseinrichtung, insbesondere zweite Anlaufschräge umfassen derart, dass ein zweites Riegelelement bei einem Überführen von der ersten Stellung in die zweite Stellung im Aufbewahrungszustand, insbesondere gegen die Wirkung einer Spanneinrichtung, vorzugsweise Feder, in eine Riegelaufnahme bewegt wird. Erstes und/oder zweites Riegelelement können rotatorisch und/oder translatorisch bewegbar sein. In einer konkreten Ausführungsform ist das erste Riegelelement (rein) translatorisch bewegbar und das zweite Riegelelement (rein) rotatorisch. Insgesamt werden dabei die Arretiervorgänge weiter vereinfacht.

Vorzugsweise wird ein erstes Riegelelement oder ein zweites Riegelelement, insbesondere das erste Riegelelement, axial bewegt und das andere, insbesondere das zweite Riegelelement, radial. Dadurch wird eine platzsparende und wirkungsvolle Struktur für die verschiedenen Arretiervorgänge bereitgestellt.

Das zweite Riegelelement kann mindestens zwei gegeneinander bewegliche Riegelelementteile aufweisen, wobei zwischen den Riegelelementteilen vorzugsweise eine Spanneinrichtung, insbesondere Feder vorgesehen ist, derart, dass die Spanneinrichtung die Riegelelementteile auseinander drängt.

Der Aufbewahrungszustand kann derart arretierbar sein, dass das Kinderwagengestell auch noch weiter zusammenfaltbar ist (also ggf. nur eine Sicherung gegen das Wiederauffalten realisiert ist). Vorzugsweise sind dazu das zweite Riegelelement und die zugehörige Riegelaufnahme derart (insbesondere asymmetrisch) konfiguriert, dass der Aufbewahrungszustand gegen ein Entfalten arretiert ist, gleichzeitig jedoch ein weiteres Zusammenfalten ermöglicht ist.

Vorzugsweise ist der Schieberabschnitt des Schiebers zur Höhenverstellung eines Griffes verschwenkbar, insbesondere in verschiedenen Schwenkpositionen arretierbar, wobei eine Arretierung und/oder ein Lösen der Arretierung des Gebrauchszustandes und/oder des Aufbewahrungszustandes durch Verschwenkung des verschwenkbaren Schieberabschnittes erfolgt. Ein Gedanke ist also darin zu sehen, dass bei einem ohnehin (zur Höhenverstellung) verschwenkbaren Schieberabschnitt diese Verschwenkbarkeit dadurch ausgenutzt wird bzw. weitergebildet wird, dass damit auch ein Arretierungsvorgang erfolgen kann. Obwohl übliche, zur Höhenverstellung verschwenkbare, Schieberabschnitte vergleichsweise weit entfernt von Gelenken zum Falten des Kinderwagens angeordnet sind, wurde erfindungsgemäß erkannt, dass insgesamt die Bedienung und auch Konstruktion vereinfacht werden kann. Der vergleichsweise weite Weg zwischen verschwenkbarem Schieberabschnitt und einem Faltgelenk kann dann vorzugsweise durch eine Schub- und/oder Zugeinrichtung, beispielsweise einen Bowdenzug, überbrückt werden. Der vorliegende Ansatz ist also gewissermaßen eine Abkehr von bisherigen Lösungen, bei denen üblicherweise unmittelbar oder in räumlicher Nähe zum Faltgelenk Betätigungseinrichtungen zur Arretierung vorgesehen wurden. Eine Betätigung durch Verschwenkung ist auch insgesamt weniger störanfällig (z.B. gegenüber Teleskoplösungen), insbesondere vergleichsweise tolerant gegenüber Schmutzeintrag. Auch sind vergleichsweise große Toleranzen in der Herstellung hinnehmbar, ohne dass die Funktionalität in erheblichem Maße eingeschränkt wird. Insgesamt wird durch die erfindungsgemäße Lösung eine einfache und sichere Arretierung, insbesondere des Gebrauchszustandes, ermöglicht.

Vorzugsweise ist der verschwenkbare Schieberabschnitt in mindestens zwei, vorzugsweise mindestens drei Schwenkstellungen arretierbar. Alternativ oder zusätzlich kann der verschwenkbare Schieberabschnitt gegenüber einem weiteren Schieberabschnitt verschwenkbar sein. Eine Schwenkachse des verschwenkbaren Schieberabschnitts weist vorzugsweise einen Abstand von mindestens 10 cm, vorzugsweise mindestens 20 cm gegenüber einem Faltgelenk auf. Der Schieberabschnitt kann insgesamt ein (U-förmiger) Bügel sein, wobei Schenkel des Bügels mindestens 10 cm oder mindestens 15 cm und/oder höchstens 30 cm oder höchstens 25 cm oder höchstens 20 cm lang sind.

Vorzugsweise ist das Kinderwagengestell so konfiguriert, dass ein Lösen der Arretierung des Gebrauchszustandes entweder (nur) durch zwei verschiedene Betätigungsschritte (Verfahrensschritte), die gleichzeitig durchgeführt werden oder (nur) durch drei aufeinanderfolgende Betätigungsschritte (Verfahrensschritte) erfolgen kann, wobei das Kinderwagengestell mindestens eine Einstellmöglichkeit aufweist, durch die mindestens zwei verschiedene Gebrauchspositionen eingestellt werden können, wobei mindestens eine weitere (mindestens dritte) Position, nämlich eine Entriegelungsposition eingenommen werden kann, in der die Arretierung des Gebrauchszustandes gelöst ist bzw. wird.

Bei der Einstellmöglichkeit handelt es sich insbesondere um eine Einstellung eines Rahmens (bzw. Gerüsts) des Kinderwagengestells (insbesondere hinsichtlich eines Relativwinkels zwischen einander angrenzenden Abschnitten oder hinsichtlich einer Entfernung von einander angrenzenden Abschnitten), also beispielsweise eine Höheneinstellung, insbesondere eine Höheneinstellung des Schiebers. Das Überführen von einer Position (insbesondere einer letzten Gebrauchsposition) in eine andere Position (insbesondere die Entriegelungsposition) kann vorzugsweise (nur) durch zwei gleichzeitige Betätigungsschritte (z.B. Drücken eines Knopfes und Verschwenken eines Abschnittes z.B. eines Hebels oder eines Rahmenteils, insbesondere eines Schiebeabschnittes) erfolgen. Alternativ kann dies auch (nur) durch drei (aufeinanderfolgende) Verfahrensschritte ermöglicht sein. In einer Ausführungsform sind dieselben Betätigungsschritte (insbesondere gleichzeitig) für das Überführen zwischen den mindestens zwei Gebrauchspositionen sowie das Überführen von einer (letzten) Gebrauchsposition in die Entriegelungsposition durch dieselben (bzw. entsprechende) Betätigungsschritte (Verfahrensschritte) durchführbar, beispielsweise durch gleichzeitiges Drücken (desselben) Knopfes bzw. allgemein derselben Sicherungseinrichtung und Bewegen (insbesondere Verschwenken) eines Abschnittes des Kinderwagengestells, insbesondere eines Schieberabschnittes. Vorzugsweise liegt die Entriegelungsposition nicht zwischen den mindestens zwei (verschiedenen) Gebrauchspositionen.

Gemäß einem allgemeinen Gedanken wird der Einstellmöglichkeit (insbesondere der Höheneinstellung) eine zusätzliche Position hinzugefügt, wobei diese zusätzliche Position vorzugsweise nicht zwischen zwei bereits vorhandenen Positionen zur Einstellung (Höhenverstellung) liegt. Die zusätzliche Position ist dabei derart gestaltet, dass bei ihrer Einnahme die Gestellverriegelung gelöst wird und der Kinderwagen zusammengefaltet werden kann.

Besonders bevorzugt sind zur Verstellung der Einstellmöglichkeit (der Höheneinstellung), insbesondere der Verschwenkung des verschwenkbaren Abschnittes, zwei gleichzeitige Verfahrensschritte notwendig, beispielsweise das Betätigen der Sicherungseinrichtung (insbesondere Drücken des Knopfes) und die gleichzeitige Verlagerung (Verschwenkung) des Schiebers. Vorzugsweise ist zwischen der letzten Gebrauchsposition und der zusätzlichen Position, besonders bevorzugt unmittelbar vor Erreichen der zusätzlichen Position, ein Mechanismus vorgesehen, der eine (versehentliche) Überführung in die zusätzliche Position verhindert, beispielsweise ein Anschlag (oder eine Arretierung). Dadurch wird der Benutzer gezwungen, tatsächlich bis zur Überführung in die zusätzliche Position beide Verfahrensschritte gleichzeitig auszuüben (und nicht etwa nur zum Verlassen der letzten Gebrauchsposition). Vorzugsweise ist die zusätzliche Position derart ausgeführt, dass sie für den normalen Gebrauch ungeeignet ist, beispielsweise in einer zum Schieben ungeeigneten Höhe und/oder Position des Schiebers, um eine versehentliche Überführung weniger wahrscheinlich zu machen.

Das Kinderwagengestell ist vorzugsweise so konfiguriert, dass ein Verschwenken des verschwenkbaren Schieberabschnittes in eine Schwenkstellung, bei der eine Arretierung und/oder ein Lösen der Arretierung des Gebrauchszustandes und/oder des Aufbewahrungszustandes erfolgt, nur nach vorheriger oder nur nach gleichzeitiger Betätigung einer Sicherungseinrichtung, insbesondere eines Knopfes, vorzugsweise an einem horizontalen Abschnitt des Schiebers, eingenommen werden kann. Der Knopf ist vorzugsweise in der Mitte des horizontalen Schieberabschnittes angeordnet. Dieser Knopf kann zusätzlich auch eine Höhenverstellung des Schiebers erlauben, in dem Sinne, dass durch Niederdrücken des Knopfes (allgemein: Betätigung der Sicherungseinrichtung) und eine gleichzeitige Verschwenkung des verschwenkbaren Schieberabschnittes erst eine Höhenverstellung realisiert werden kann.

Insbesondere kann in einer Schwenkstellung des verschwenkbaren Schieberabschnittes, in der dieser keine (sinnvoll) nutzbare Gebrauchsposition mehr einnimmt (jedoch insbesondere eine Position vor der Entriegelungsposition) beispielsweise eine Anschlag- und/oder eine Rasteinrichtung verhindern, dass der Schieberabschnitt in eine Schwenkstellung verbracht werden kann, in der eine Arretierung und/oder ein Lösen der Arretierung des Gebrauchszustandes und/oder des Aufbewahrungszustandes erfolgen kann. Erst durch Betätigung der Sicherungseinrichtung (insbesondere Drücken des Knopfes) wird dann vorzugsweise eine Arretierung und/oder ein Lösen der Arretierung des Gebrauchszustandes und/oder des Aufbewahrungszustandes ermöglicht (dadurch, dass dann die dafür notwendige Schwenkstellung erreicht werden kann). Vorzugsweise ist die Betätigung der Sicherungseinrichtung (insbesondere das Drücken des Knopfes) in einer Schwenkstellung erforderlich, bei der sich der verschwenkbare Schieberabschnitt in einem Winkelbereich befindet, der zwischen einer vertikalen Ausrichtung und einer Ausrichtung antiparallel zu dem an dem verschwenkbaren Schieberabschnitt anschließenden Schieberabschnitt liegt (in der der verschwenkbare Schieberabschnitt also insbesondere in Anlage zu dem an dem verschwenkbaren Schieberabschnitt anschließenden Schieberabschnitt kommt), vorzugsweise ist die Betätigung der Sicherungseinrichtung erforderlich in einem Winkelbereich, der zwischen einer Stellung des verschwenkbaren Schieberabschnitts, bei dem der verschwenkbare Schieberabschnitt ausgehend von der vertikalen Erstreckung weiter in Richtung des an den verschwenkbaren Schieberabschnitt anschließenden Schieberabschnittes rotiert ist, beispielsweise um einen Winkel von mindestens 10° oder mindestens 20° und einer Stellung des verschwenkbaren Schieberabschnittes liegt, in der sich dieser (zumindest im Wesentlichen) antiparallel zu dem sich an dem verschwenkbaren Schieberabschnitt anschließenden Schieberabschnitt erstreckt oder vorzugsweise in einem Winkel von mindestens 10° zu diesem sich anschließenden Schieberabschnitt erstreckt.

Durch die Notwendigkeit der Betätigung der Sicherungseinrichtung (bzw. die entsprechende Konfiguration des Kinderwagengestells) wird eine Gestellverriegelung bereitgestellt, die insbesondere nur durch zwei gleichzeitige Verfahrensschritte (Verschwenken des verschwenkbaren Schieberabschnittes und Betätigen der Sicherungseinrichtung, insbesondere Drücken des Knopfes) ermöglicht wird.

Vorzugsweise ist der Kinderwagen so konfiguriert, dass die Überführung in die Entriegelungsposition (zusätzliche Position) und das Zusammenfalten des Gestells eine Kraft oder ein Drehmoment erfordert, deren Beträge verschieden sind und/oder oder deren Richtungen verschiedenen sind. Insbesondere ist der Kinderwagen so konfiguriert, dass ein Drehmoment zur Verschwenkung des verschwenkbaren Abschnitts zur Arretierung und/oder zum Lösen der Arretierung des Gebrauchszustandes und/oder des Aufbewahrungszustandes in eine Richtung weist, die verschieden ist von der Richtung einer für das Zusammenfalten des Gestells notwendigen Drehmoments. Vorzugsweise ist die zusätzliche Position (Entriegelungsposition) weiter (mindestens 1,5mal oder mindestens 2mal oder 3mal oder mindestens 5mal soweit) von der letzten Position entfernt als (wie) die Gebrauchspositionen (im Durchschnitt) untereinander.

Im Allgemeinen kann das Kinderwagengestell ein vorderes Bein, insbesondere ein vorderes Beinpaar und mindestens ein hinteres Bein, insbesondere ein hinteres Beinpaar aufweisen. Jeweils ein Vorder- und ein Hinterbein sind vorzugsweise an einem Faltgelenk gelenkig miteinander verbunden, mit dem ggf. auch der Schieber gelenkig verbunden sein kann. Zusätzlich kann ggf. ein Verbindungsteil (Verbindungsgestänge) Vorderbein und Hinterbein, ggf. vorderes Beinpaar und hinteres Beinpaar, miteinander verbinden. Dieses Verbindungsteil kann ggf. ebenfalls gelenkig mit dem Faltgelenk verbunden sein.

Die Betätigungseinrichtung kann so konfiguriert sein, dass das Lösen der Arretierung im Gebrauchszustand, das Überführen in den Aufbewahrungszustand und die Arretierung des Aufbewahrungszustandes mit einer Hand, insbesondere durch Greifen und entsprechendes Kraftausüben, insbesondere Drücken, auf einen Griff, insbesondere Schiebergriff erfolgen kann. Alternativ oder zusätzlich kann die Betätigungseinrichtung so konfiguriert sein, dass das Lösen der Arretierung im Aufbewahrungszustand, das Überführen in den Gebrauchszustand und die Arretierung des Gebrauchszustandes mit einer Hand, insbesondere durch Greifen und entsprechendes Kraftausüben, insbesondere Ziehen, auf (an) einen/- m Griff, insbesondere Schiebergriff, erfolgen kann.

Die oben genannte Aufgabe wird weiterhin gelöst durch einen Kinderwagen, insbesondere Kindersportwagen, Buggy oder dergleichen Fahrzeug für Kinder, aufweisend ein Kinderwagengestell der oben beschriebenen Art. Bei dem Kinderwagen kann eine integrierte Aufnahme für das Kind vorgesehen sein oder ein (ggf. separierbarer) Kinderwagenaufsatz, insbesondere Kinderschale, Hochstuhlgestell, Kinder-Autositz (oder dergleichen).

Weitere Ausführungsformen ergeben sich aus den Unteransprüchen. Nachfolgend wird die Erfindung anhand eines Ausführungsbeispieles beschrieben, das anhand der Abbildungen näher erläutert wird. Hierbei zeigen:
- Fig. 1a: ein erfindungsgemäßes Kinderwagengestell in einer Seitenansicht;
- Fig. 1b: eine Seitenansicht gemäß Fig. 1a in einem abweichenden Zustand des Kinderwagengestells;
- Fig. 1c: eine Seitenansicht gemäß der vorherigen Figur in einem weiteren Zustand des Kinderwagengestells;
- Fig. 1d: eine Seitenansicht gemäß der vorherigen Figur in einem weiteren Zustand des Kinderwagengestells;
- Fig. 1e: eine Seitenansicht gemäß der vorherigen Figur in einem weiteren Zustand des Kinderwagengestells;
- Fig. 1f: eine Seitenansicht gemäß der vorherigen Figur in einem weiteren Zustand des Kinderwagengestells;
- Fig. 1g: eine Seitenansicht gemäß der vorherigen Figur in einem weiteren Zustand des Kinderwagengestells;
- Fig. 1h: eine Seitenansicht gemäß der vorherigen Figur in einem weiteren Zustand des Kinderwagengestells;
- Fig. 1i: eine Seitenansicht gemäß der vorherigen Figur in einem weiteren Zustand des Kinderwagengestells;
- Fig. 1j: eine Seitenansicht gemäß der vorherigen Figur in einem weiteren Zustand des Kinderwagengestells;
- Fig. 2: eine Explosionsansicht eines Faltgelenkes;
- Fig. 3a: eine erste Schnittansicht des Faltgelenkes in einem ersten Zustand;
- Fig. 3b: ein Schnitt des Faltgelenkes in einem Zustand gemäß Fig. 3a;
- Fig. 4a: eine Schnittansicht des Faltgelenkes analog Fig. 3a in einem abweichenden Zustand des Faltgelenkes;
- Fig. 4b: einen weiteren Schnitt des Faltgelenkes in dem Zustand gemäß Fig. 4a;
- Fig. 5: ein Schnitt des Faltgelenkes analog Fig. 3a und 4a in einem weiteren Zustand des Faltgelenkes;
- Fig. 6: einen Schnitt durch das Faltgelenk analog den Fig. 3a, 4a und 5 in einem weiteren Zustand des Faltgelenkes;
- Fig. 7: einen Schnitt analog u.a. Fig. 3a in einem weiteren Zustand des Faltgelenkes;
- Fig. 8: einen Schnitt analog u.a. Fig. 3a in einem weiteren Zustand des Faltgelenkes;
- Fig. 9: einen vergrößerten Ausschnitt aus Fig. 1h.

In der nachfolgenden Beschreibung werden für gleiche und gleichwirkende Teile dieselben Bezugsziffern verwendet.

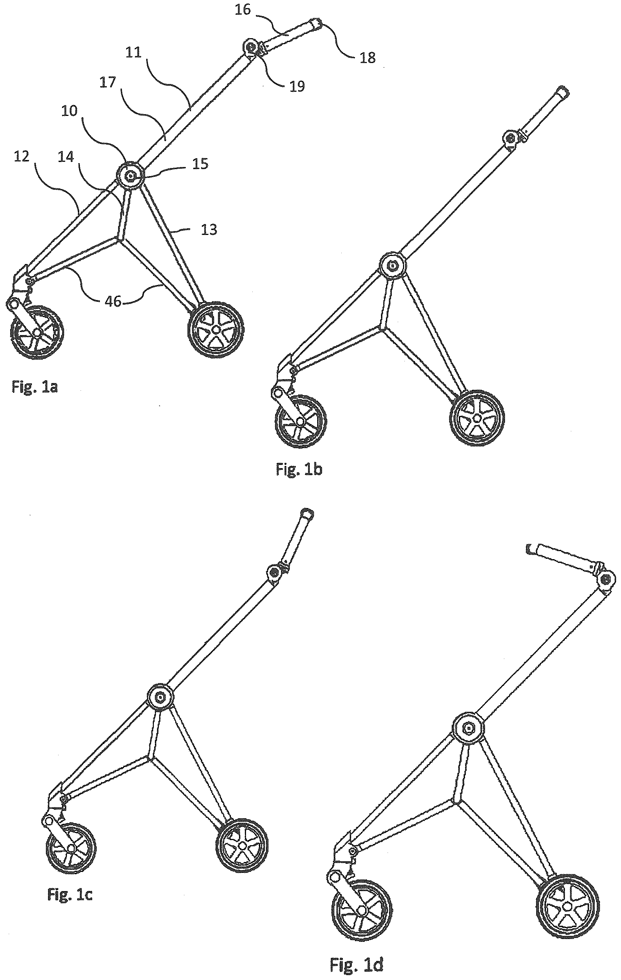

Fig. 1a zeigt ein faltbares Kinderwagengestell mit einem (zentralen) Faltgelenk 10, über das ein Schieber 11 sowie ein vorderes Bein 12 eines vorderen Beinpaares, ein hinteres Bein 13 eines hinteren Beinpaares und ein Verbindungsteil 14 gelenkig miteinander verbunden sind. Ein zweites, entsprechend ausgebildetes und angeordnetes Faltgelenk kann in der Zeichnung gemäß Fig. 1a hinter dem gezeigten Faltgelenk 10 angeordnet sein. Auch die Elemente 12, 13, 14, und/oder 46 können entsprechend doppelt ausgeführt sein. Schieber 11, vorderes Bein 12 und hinteres Bein 13 sind um eine Achse 15 rotierbar. Das Verbindungsteil 14 rotiert gegenüber dieser Achse 15 exzentrisch (wie weiter unten noch näher erläutert werden wird). Der Schieber 11 weist einen distalen Schieberabschnitt 16 sowie einen proximalen Schieberabschnitt 17 auf. Der distale Schieberabschnitt 16 umfasst einen Griff 18 und ist gelenkig über ein Schiebergelenk 19 mit dem proximalen Schieberabschnitt 17 verbunden. Durch Verschwenken des distalen Schieberabschnittes 16 gegenüber dem proximalen Schieberabschnitt 17 kann die Höhe des Griffes 18 eingestellt werden (beispielsweise in drei verschiedenen Positionen, insbesondere einer nach unten geklappten, einer mittleren und einer nach oben geklappten Position). In den verschiedenen Positionen kann der distale Schieberabschnitt 16 dann gegenüber dem proximalen Schieberabschnitt 17 ggf. arretiert werden. Zum Lösen der Arretierung kann ein (zentraler) Auslösemechanismus (Knopf) an dem Griff 18 (Querstange) des distalen Schieberabschnittes 16 vorgesehen sein. Dieser

Auslösemechanismus (Knopf) kann beispielsweise über ein Zugelement (insbesondere Bowdenzug) eine Arretierung im Schiebergelenk 19 lösen.

Fig. 1b zeigt den Zustand (Gebrauchszustand) gemäß Fig. 1a, wobei im Unterschied zu Fig. 1a der distale Schieberabschnitt 16 in eine abweichende (mittlere) Stellung geschwenkt ist, so dass der Griff 18 höher positioniert ist. Fig. 1c wiederum zeigt eine Stellung, in der der distale Schieberabschnitt 16 noch weiter verschwenkt ist, so dass der Griff 18 noch höher (in maximaler Höhe) positioniert ist.

In dem Gebrauchszustand gemäß Fig. 1a bis 1c kann der Kinderwagen zum Befördern des Kindes (in einem Kinderwagenaufsatz) benutzt werden.

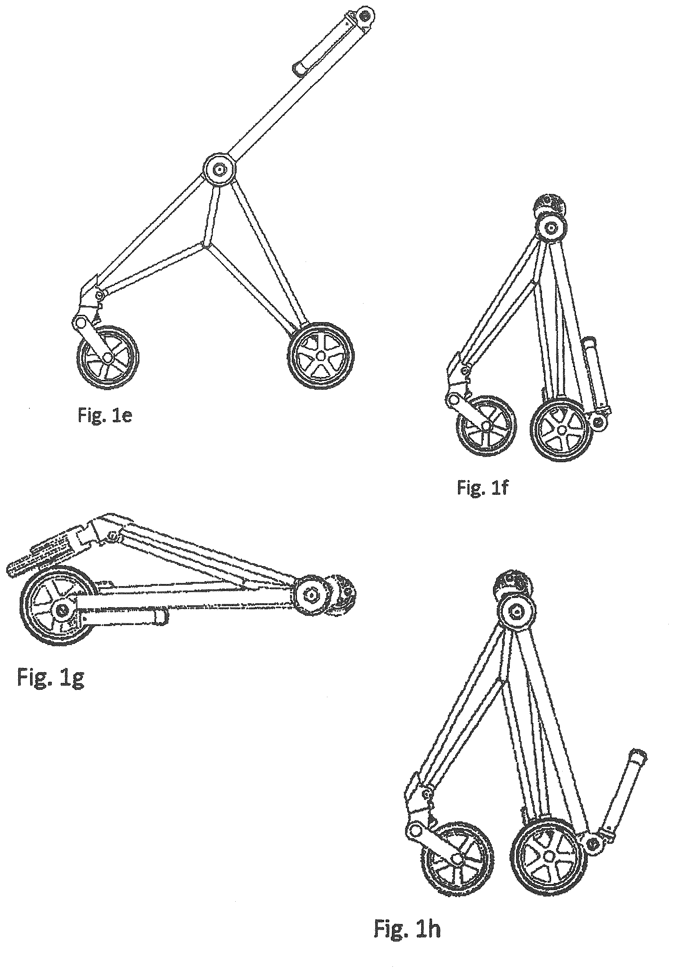

Wie in Fig. 1d und 1e illustriert, kann der distale Schieberabschnitt 16 über die Position gemäß Fig. 1c hinaus rotiert werden (Fig. 1d), bis er nach vorne an den proximalen Schieberabschnitt 17 anschlägt (Fig. 1e). Dadurch wird ein Verstellelement im Faltgelenk 10 (insbesondere gegen die Kraft einer Feder, wie weiter unten noch im Detail beschrieben) aus einer ersten in eine zweite Position verschoben. Entscheidend ist hierbei jedoch zunächst, dass eine Arretierung des Faltgelenkes 10 gemäß Fig. 1e derart gelöst ist, dass das Kinderwagengestell in den Zustand gemäß Fig. 1f (zusammengefalteter Aufbewahrungszustand) verbracht werden kann. Die Arretierung des Gebrauchszustandes wird also durch Verschwenken des distalen Schieberabschnittes 16 gelöst. Das Kinderwagengestell kann so konfiguriert sein, dass zum Verschwenken aus der Position gemäß Fig. 1d in die Position gemäß Fig. 1e zumindest in einer Zwischenposition zwischen diesen beiden Positionen, insbesondere unmittelbar vor Erreichen der Position gemäß Fig. 1e während des Verschwenkens eine Sicherungseinrichtung betätigt werden muss, insbesondere ein (vorzugsweise der oben erwähnte) Auslösemechanismus (Knopf) betätigt werden muss. Dadurch wird es zumindest deutlich weniger wahrscheinlich, dass die Position gemäß Fig. 1e ungewollt erreicht werden kann. Unter einer Betätigung der Sicherungseinrichtung, vorzugsweise des Knopfes, ist insbesondere eine Betätigung zu verstehen, bei der die Sicherungseinrichtung (der Knopf) aktiv (beispielsweise gegen eine Federkraft) mit Druck beaufschlagt wird.

In Fig. 1g ist ein Zustand gezeigt, bei dem das Kinderwagengestell gegenüber Fig. 1f noch weiter zusammengefaltet ist. In dem Zustand gemäß Fig. 1f ist das Kinderwagengestell gegenüber einem Wiederauffalten arretiert, nicht (oder nur in geringerem Maße) jedoch gegen ein weiteres Zusammenfalten, wie in Fig. 1g gezeigt. Auch der Zustand gemäß Fig. 1g ist nicht arretiert, so dass in diesem Zustand bei einem entsprechenden Auffalten wieder der Zustand gemäß Fig. 1f erreicht werden kann (ohne dass der distale Abschnitt 16 bewegt wird). Gegenüber einem weiteren Auffalten ist das Kinderwagengestell jedoch gesichert.

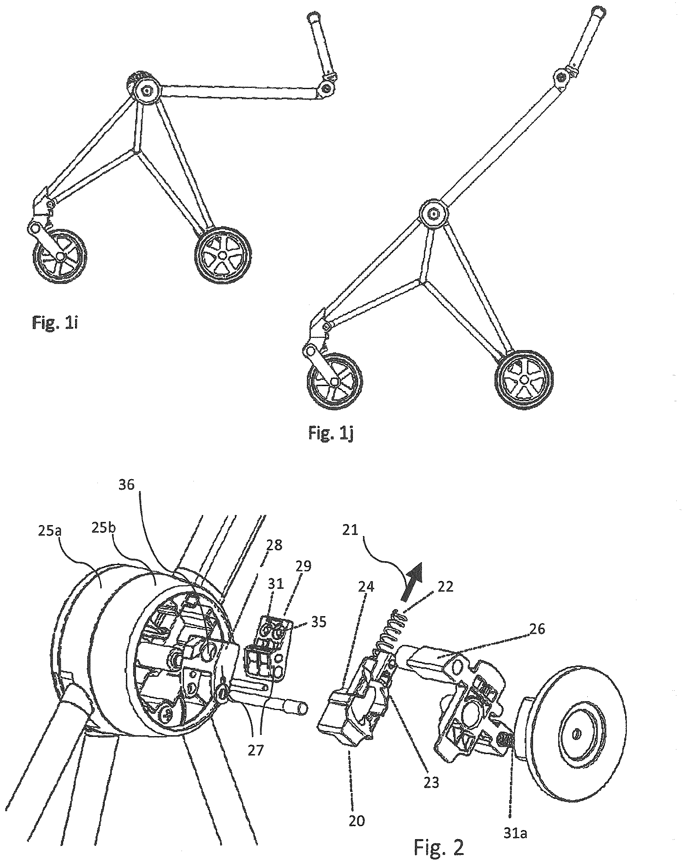

Das weitere Wiederauffalten des Kinderwagengestells in die Gebrauchsposition erfolgt grundsätzlich analog zum Zusammenfalten, wie anhand der Fig. 1a bis 1f bzw. 1g beschrieben. Zunächst wird der distale Schieberabschnitt 16 zurückgeschwenkt (siehe Fig. 1h), so dass sich die Arretierung im Faltgelenk 10 wieder löst. Dadurch kann das Kinderwagengestell, wie in Fig. 1i und 1j gezeigt, wieder aufgefaltet werden. Dabei zeigt Fig. 1j den Gebrauchszustand entsprechend Fig. 1c.

Im Nachfolgenden wird anhand der Fig. 2-8 der Mechanismus der Arretierung von Gebrauchszustand bzw. Aufbewahrungszustand weiter erläutert.

Fig. 2 zeigt eine (teilweise) Explosionsansicht des Faltgelenks 10 im Zustand gemäß Fig. 1a oder 1j. Konkret zeigt Fig. 2 eine Verstelleinrichtung 20 (Verstellelement), die (das) radial (hier und im Nachfolgenden soll sich, soweit nicht anders angegeben, radial und axial stets auf die Achse 15 gemäß Fig. 1a beziehen) durch den oberen Schieberabschnitt 16 bzw. ein mit diesem verbundenes Zugelement (insbesondere Bowdenzug; nicht in den Figuren gezeigt) in Richtung eines Pfeiles 21 gegen die Wirkung einer ersten Feder 22 gezogen werden kann. Dadurch wird auch eine erste Schrägfläche (Rampe) 23 und eine zweite Schrägfläche (Rampe) 24 in Richtung des Pfeiles 21 bewegt.

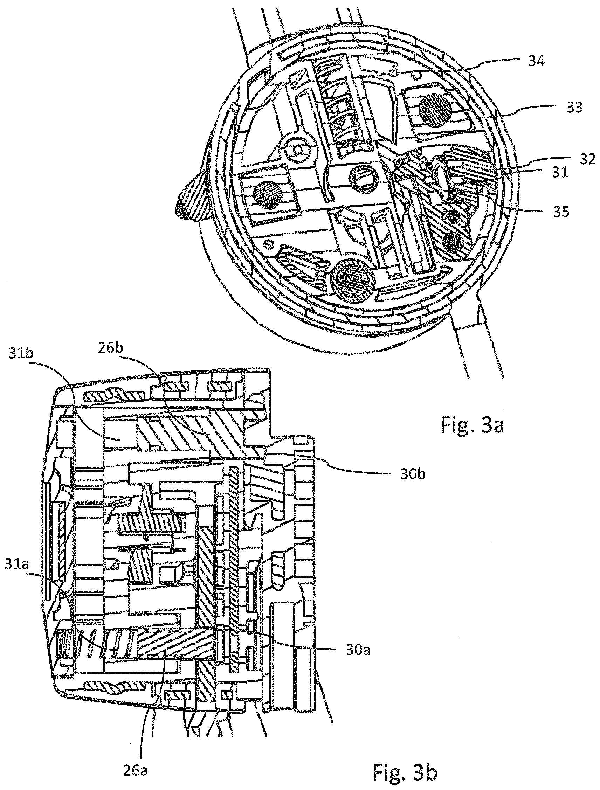

Bei einer Bewegung der Verstelleinrichtung 20 gegenüber Gelenkabschnitten 25a, 25b wird aufgrund der Schrägflächen 23, 24 ein erstes Riegelelement 26 in axialer Richtung und ein zweites Riegelelement 27, umfassend ein erstes (äußeres) Riegelelementteil 28 und ein zweites (inneres) Riegelelementteil 29, in radialer Richtung verschoben. Diese Verschiebung bzw. Bewegung der Riegelelemente 26, 27 erfolgt gegen die Kraft von Federn (nicht in Fig. 2 gezeigt, lokalisiert bei den Bezugszeichen 31a, 31b und 35), wie nachfolgend auch noch anhand der Fig. 3a bis 8 beschrieben.

Die Fig. 3a und 3b entsprechen einem Zustand des Kinderwagengestells gemäß den Fig. 1a, 1b, 1c oder 1d. In Fig. 3b sind Riegelabschnitte 26a, 26b des ersten Riegelelementes 26 zu sehen, die in korrespondierenden Riegelaufnahmen 30a, 30b positioniert sind. Dadurch ist das Faltgelenk 10 derart fixiert, dass eine Faltung unmöglich ist. In dem Zustand gemäß Fig. 3a und 3b verhindert also das erste Riegelelement 26 ein Falten über das Faltgelenk. Das zweite Riegelelement ist in Fig. 3a im Querschnitt zu sehen. In dem Zustand gemäß Fig. 3a sichert das zweite Riegelelement 27 weder den Gebrauchszustand gegen ein Zusammenfalten (diese Funktion übernimmt das erste Riegelelement 26) noch ist das Riegelelement 27 in einem Zustand, in dem es den Aufbewahrungszustand sichern könnte (wie weiter unten noch näher erläutert).

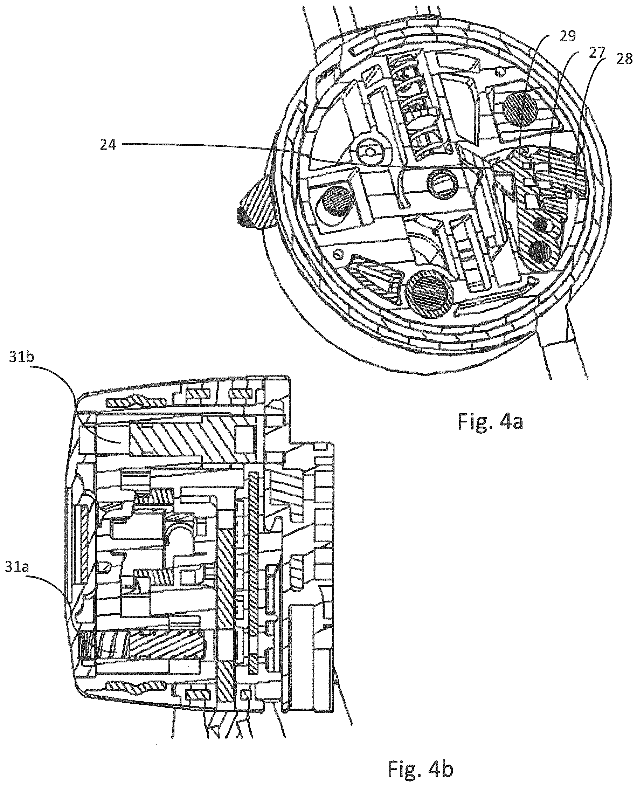

Die Fig. 4a und 4b entsprechen dem Zustand gemäß Fig. 1e. In diesem Zustand ist der Kinderwagen noch aufgefaltet, jedoch der obere Schieberabschnitt 16 bereits in seine maximal verschwenkte Endposition verschwenkt. Dies ist gleichbedeutend damit, dass die Verstelleinrichtung 20 gemäß Fig. 2 in Richtung des Pfeiles 21 in radialer Richtung bewegt wurde, was die in Fig. 4a und 4b gezeigten Konsequenzen hat. Aufgrund der in Fig. 2 dargestellten ersten Anlaufschräge 23 werden die Riegelabschnitte 26a und 26b aus den zugeordneten Riegelaufnahmen 30a und 30b gedrängt und zwar gegen die Federkraft von zweiten Federn (teilweise nicht im Detail gezeigt; lokalisiert bei 31a und 31b, siehe Fig. 3b). Damit sichert das erste Riegelelement 26 den Kindersitz nicht mehr gegen ein Zusammenfalten. Auch das zweite Riegelelement 27 gemäß Fig. 4a sichert den Kindersitz (noch) nicht gegen einen Faltvorgang. Allerdings ist das zweite Riegelelement 27 nun in einem Zustand, in dem es den Aufbewahrungszustand gemäß Fig. 1f sichern (arretieren) kann, sobald dieser (wie in Fig. 1f gezeigt) eingenommen wird. Dies ist (unter anderem) die Folge einer Bewegung des zweiten Riegelelementteils 29 in Richtung des ersten Riegelelementteils 28. Die Stellung des ersten Riegelelementteils 28 entspricht derjenigen gemäß Fig. 3a. Die Stellung des zweiten Riegelelementteils 29 hat sich jedoch geändert. Konkret wird durch diese Positionsänderung die dritte Feder (nicht im Detail zu sehen, lokalisiert bei 31, siehe Fig. 2 und 3a) gestaucht, so dass eine Federkraft auf einen Riegelvorsprung 32 wirkt und der Riegelvorsprung 32 grundsätzlich in radialer Richtung gedrängt wird. Der Riegelvorsprung 32 stößt hier jedoch an eine Innenfläche 33 eines umgebenden Teils 34 an, so dass er trotz Federkraft in der Position analog Fig. 3a verharrt. Durch den Übergang bzw. die Betätigung des distalen Schieberabschnittes 16 (also den Übergang von Fig. 3a, 3b zu 4a, 4b) wird die vierte Feder (in den Figuren nicht im Detail zu sehen; lokalisiert bei 35, siehe Fig. 3a) gestaucht. Diese Feder 35 stützt sich einerseits an dem zweiten Riegelelementteil 29 ab und andererseits an der Innenfläche 33 des umgebenden Teils 34. Dazu ist eine Öffnung 36 (siehe Fig. 2) im ersten Riegelelementteil vorgesehen. Die vierte Feder 35 drängt also grundsätzlich das erste Federteilelement in radialer Richtung nach innen. Aufgrund des Wirkens der zweiten Schrägfläche 24 wird dieses Nach-Innen-Drängen jedoch im Zustand gemäß Fig. 4a, 4b blockiert.

In Fig. 4a und 4b sichern weder das erste Riegelelement noch das zweite Riegelelement, so dass das Kinderwagengestell gefaltet werden kann.

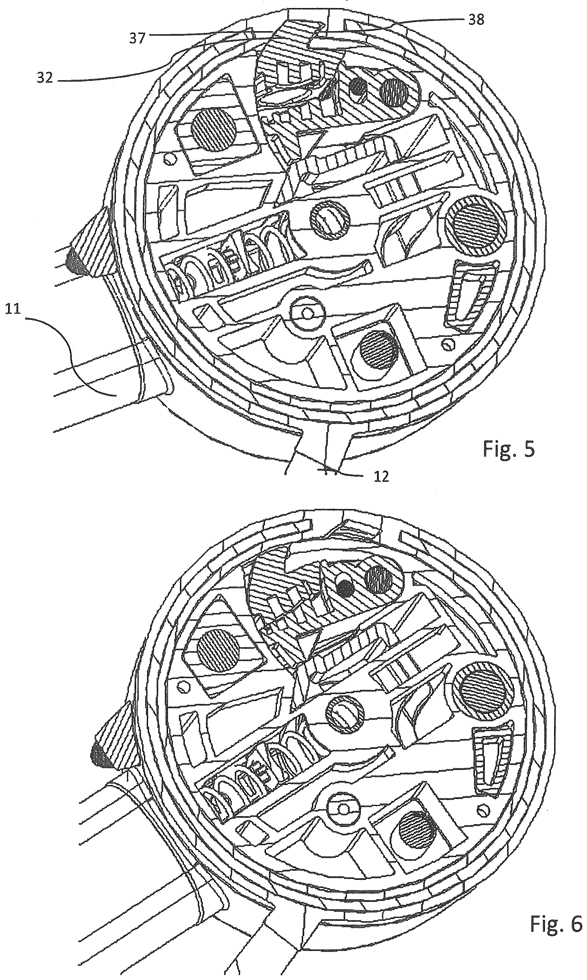

Fig. 5 zeigt das Faltgelenk 10 in einem Zustand analog Fig. 1f, also in einem gefalteten Aufbewahrungszustand. Der Schieber 11 ist hier gegenüber dem vorderen Bein 12 rotiert. Durch diese Rotation gelangt der vorgespannte Riegelvorsprung 32 in eine entsprechende Riegelaufnahme 37, so dass dieser Aufbewahrungszustand arretiert ist. Riegelvorsprung 32 und Riegelaufnahme 37 sind jedoch derart (asymmetrisch) konfiguriert, dass bei einem noch weiteren Zusammenfalten (bis in die Position gemäß Fig. 1g) keine (oder nur eine geringe) Sicherung vorliegt, insbesondere die Verriegelung alleine durch weiteres Zusammenfalten (ohne Auslösen irgendeines Mechanismus) überwunden kann. Dies ist in Fig. 6 (analog Fig. 1g) gezeigt. Insbesondere ein Hinterschnitt 38 verhindert ein Zurückfalten in Richtung Gebrauchszustand (ohne eine entsprechende Betätigung der Betätigungseinrichtung).

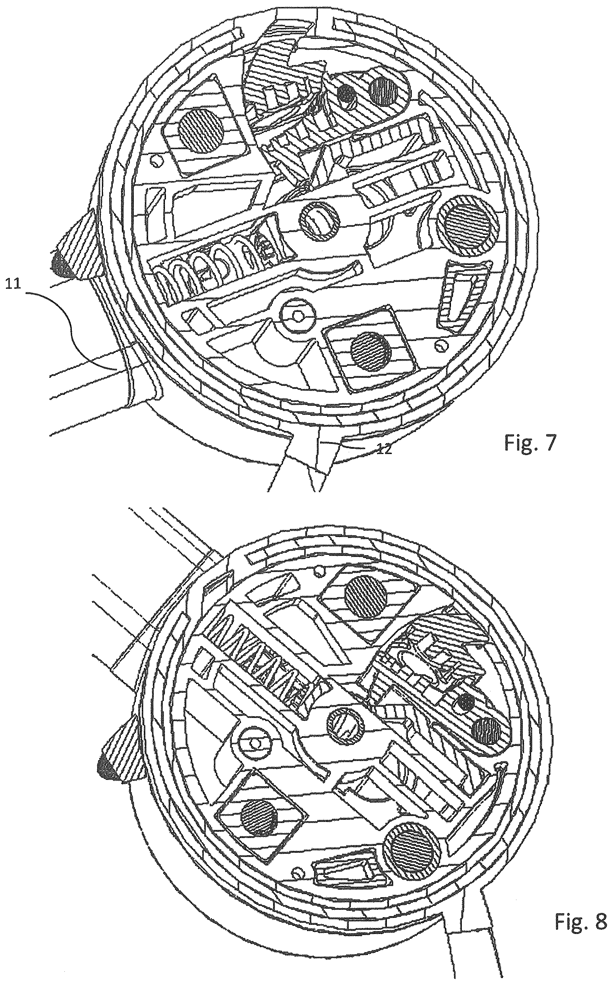

Wird die Betätigungseinrichtung (der distale Schieberabschnitt 16) nun wieder betätigt, also entsprechend Fig. 1h zurückgeschwenkt, kann sich das zweite Riegelelementteil 29 (siehe Fig. 7) radial nach innen bewegen. Diese Bewegung ist aufgrund der Vorspannung der vierten Feder 35 erzwungen. Weiterhin wird das erste Riegelelementteil 28 durch das zweite Riegelelementteil 29 in radialer Richtung nach innen gezogen, so dass der Riegelvorsprung 32 aus der zugehörigen Riegelaufnahme 37 gezogen wird und die Arretierung insgesamt aufgehoben wird, so dass der Kindersitz aufgefaltet werden kann. Der Zustand gemäß Fig. 1i ist im Querschnitt nochmals in Fig. 8 dargestellt. Der Zustand gemäß Fig. 1j entspricht dem Querschnitt gemäß Fig. 3a.

Wie (beispielsweise) in Fig. 3a erkennbar, ist das erste Riegelelementteil 28 gegenüber dem zweiten Riegelelementteil 29 verschwenkbar um eine Achse 40 gelagert, wobei diese Verschwenkung durch eine Verschwenkungsbegrenzung 41 (konkret in Form eines Langloches im zweiten Riegelelementteil, das mit einem entsprechenden Stift im ersten Riegelelementteil zusammenwirken kann) begrenzt ist.

Bei der Position gemäß Fig. 1f kann der Kinderwagen noch frei auf allen Rädern stehen ("self standing-Funktion"). In dem noch weiter gefalteten (flacheren) zweiten Aufbewahrungszustand gemäß Fig. 1g ist dies nicht mehr möglich. Aus dem zweiten Aufbewahrungszustand gemäß Fig. 1g kann das Kinderwagengestell ohne Überwinden eines Widerstandes (einer Arretierung) wieder in den ersten Aufbewahrungszustand gemäß Fig. 1f verbracht werden.

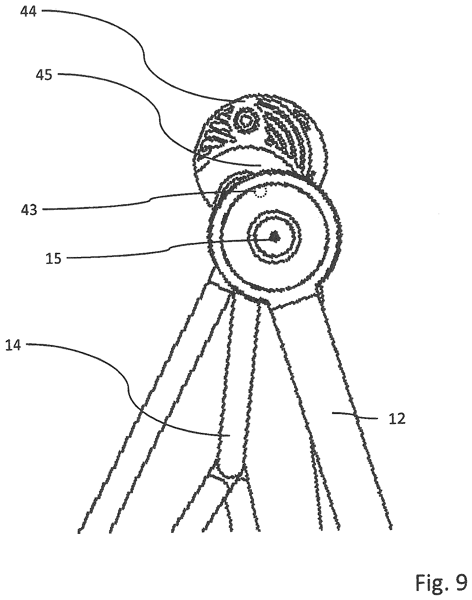

Wie in Fig. 3 bis 8 beschrieben kann grundsätzlich der (in Fig. 3 bis 8 gezeigte) Schieber 11 gegenüber dem jeweiligen Vorderbein 12 arretiert werden. Dabei sind auch alle übrigen schwenkbar gelagerten Teile, nämlich die Hinterbeine und das Verbindungsteil fixiert (gesichert). Weiterhin ist es so, dass bei einem Zusammenfalten von Schieber 11 gegenüber vorderem Beinpaar 12 automatisch auch die übrigen Teile (Verbindungsteil 14 und hinteres Bein 13) zusammengefaltet werden. Dies wird dadurch erreicht, dass das Verbindungsteil 14 um eine (in Fig. 9 als gestrichelter Kreis angedeutete) Schwenkachse 43 exzentrisch gegenüber der Achse 15 schwenkbar ist. Weiterhin ist das Verbindungsteil 14 fest mit einem Kulissenteil 44, umfassend eine Kulisse 45, verbunden. Diese Kulisse 45 hat führende Funktion und kann ggf. auch sichernde Funktion haben (bei Ausbildung eines entsprechenden Hinterschnittes). Entscheidend ist jedoch, dass sich das Verbindungsteil 14 aufgrund der exzentrischen Schwenklagerung nach oben bewegt, was aufgrund der Gesamtkonstruktion, wie in Fig. 1a dargestellt, dazu führt, dass sich vorderes Bein 12 und hinteres Bein 13 einander annähern und sich in Fig. 1a gezeigte Verbindungsstreben 46 einander annähern. Um dies zu ermöglichen, sind vorderes Bein 12, hinteres Bein 13 und jeweiliges Verbindungsteil 14 untereinander verschwenkbar.

### Bezugszeichen

- 10: Faltgelenk
- 11: Schieber
- 12: Vorderes Bein
- 13: Hinteres Bein
- 14: Verbindungsteil
- 15: Achse
- 16: Distaler Schieberabschnitt
- 17: Proximaler Schieberabschnitt
- 18: Griff
- 19: Schiebergelenk
- 20: Verstelleinrichtung (Verstellelement)
- 21: Pfeil
- 22: Erste Feder
- 23: Erste Schrägfläche
- 24: Zweite Schrägfläche
- 25a: Erster Abschnitt
- 25b: Zweiter Abschnitt
- 26: Erstes Riegelelement
- 26a: Riegelabschnitt
- 26b: Riegelabschnitt
- 27: Zweites Riegelelement
- 28: Erstes (äußeres) Riegelelementteil
- 29: Zweites (inneres) Riegelelementteil
- 30a: Riegelaufnahme
- 30b: Riegelaufnahme
- 31: Dritte Feder
- 31a: (zweite) Feder
- 31b: (zweite) Feder
- 32: Riegelvorsprung
- 33: Innenfläche
- 34: Umgebendes Teil
- 35: Vierte Feder
- 36: Öffnung
- 37: Riegelaufnahme
- 38: Hinterschnitt
- 40: Achse
- 41: Verschwenkungsbegrenzung
- 43: Schwenkachse
- 44: Kulissenteil
- 45: Kulisse
- 46: Verbindungsstrebe

## Patentansprüche

1. Faltbares Kinderwagengestell, insbesondere Kindersportwagengestell, Buggygestell oder dergleichen Fahrzeuggestell für Kinder, wobei das Kinderwagengestell mit Rädern sowie mit einem Schieber (11) zum Schieben des Kinderwagengestells ausgestattet ist, wobei das Kinderwagengestell mindestens in einen arretierten Gebrauchszustand sowie in mindestens einen zusammengefalteten arretierten Aufbewahrungszustand verbracht werden kann, wobei eine, insbesondere manuelle, Betätigungseinrichtung (16) vorgesehen und derart ausgebildet ist, dass bei einer Überführung vom arretierten Gebrauchszustand in den arretierten Aufbewahrungszustand mindestens zwei Arretiervorgänge, nämlich sowohl ein Lösen der Arretierung im Gebrauchszustand als auch ein Einstellen einer Arretierung im Aufbewahrungszustand, durch eine einzige erste Betätigung der Betätigungseinrichtung (16) durchgeführt werden, **dadurch gekennzeichnet, dass** bei einer Überführung von dem arretierten Aufbewahrungszustand in den arretierten Gebrauchszustand ein Arretiervorgang, nämlich
ein Lösen der Arretierung in
dem Aufbewahrungszustand, durch eine einzige zweite Betätigung der Betätigungseinrichtung (16) durchgeführt wird, wobei die zweite Betätigung vorzugsweise eine Betätigung ohne Bewegungsumkehr ist und/oder wobei die zweite Betätigung vorzugsweise eine kinematische Umkehr der ersten Betätigung darstellt.

2. Faltbares Kinderwagengestell nach Anspruch 1, **dadurch gekennzeichnet, dass** die erste Betätigung eine Betätigung ohne Bewegungsumkehr ist.

3. Faltbares Kinderwagengestell nach Anspruch 1 oder 2, **dadurch gekennzeichnet, dass**
die Betätigungseinrichtung (16) so konfiguriert ist, dass die erste Betätigung zur Folge hat, dass das Lösen der Arretierung im Gebrauchszustand und das Einstellen der Arretierung im Aufbewahrungszustand zumindest abschnittsweise zeitlich überlappt, insbesondere gleichzeitig erfolgt, oder zeitlich nacheinander erfolgt.

4. Faltbares Kinderwagengestell nach einem der vorhergehenden Ansprüche, **dadurch gekennzeichnet, dass** die Betätigungseinrichtung (16) zur Durchführung der ersten und/oder zweiten Betätigung verschwenkbar ist.

5. Faltbares Kinderwagengestell nach einem der vorhergehenden Ansprüche, **dadurch gekennzeichnet, dass**
die Betätigungseinrichtung (16) ein Bestandteil des Schiebers (11) ist und/oder ein Bügel, insbesondere Schieberbügel, ist und/oder ein Hebel und/oder eine Klappe ist und/oder dass mindestens ein Schieberabschnitt (16) des Schiebers zur Höhenverstellung eines Griffes verschwenkbar ist, insbesondere in verschiedenen Schwenkpositionen arretierbar ist.

6. Faltbares Kinderwagengestell nach einem der vorhergehenden Ansprüche, **dadurch gekennzeichnet, dass**
die Betätigungseinrichtung (16) mit einer Verstelleinrichtung (20), vorzugsweise über ein Zugelement, insbesondere einen Bowdenzug, zusammenwirkt, wobei die Verstelleinrichtung (20) in mindestens eine erste und eine zweite Stellung einstellbar ist, wobei der Gebrauchszustand in der ersten Stellung arretiert ist und/oder eine Arretierung des Aufbewahrungszustands in der ersten Stellung gelöst ist und/oder wobei der Aufbewahrungszustand in der zweiten Stellung arretiert ist und/oder eine Arretierung des Gebrauchszustands in der zweiten Stellung gelöst ist.

7. Faltbares Kinderwagengestell nach Anspruch 6, **dadurch gekennzeichnet, dass** die Verstelleinrichtung (20) eine erste Wirkübertragungseinrichtung, insbesondere erste Anlaufschräge (23) umfasst derart, dass ein erstes Riegelelement (26) bei einem Überführen von der ersten Stellung in die zweite Stellung im Gebrauchszustand, insbesondere gegen die Wirkung einer Spanneinrichtung, vorzugsweise zweite Feder (31a, 31b), aus einer Riegelaufnahme (30a, 30b) bewegt wird und/oder
die Verstelleinrichtung (20) eine zweite Wirkübertragungseinrichtung, insbesondere zweite Anlaufschräge (24) umfasst derart, dass ein zweites Riegelelement (27) bei einem Überführen von der ersten Stellung in die zweite Stellung im Aufbewahrungszustand, insbesondere gegen die Wirkung einer Spanneinrichtung, vorzugsweise vierte Feder (35), in eine Riegelaufnahme bewegt wird.

8. Faltbares Kinderwagengestell nach Anspruch 7, **dadurch gekennzeichnet, dass** das erste oder das zweite Riegelelement axial bewegt wird und das andere Riegelelement radial.

9. Faltbares Kinderwagengestell nach Anspruch 7 oder 8, **dadurch gekennzeichnet, dass**
das zweite Riegelelement (27) mindestens zwei gegeneinander bewegliche Riegelelementteile (28, 29) aufweist, wobei zwischen den Riegelelementteilen (28, 29) eine Spanneinrichtung, insbesondere dritte Feder (31) vorgesehen ist, derart, dass die Spanneinrichtung die Riegelelementteile (28, 29) auseinander drängt.

10. Faltbares Kinderwagengestell nach Anspruch 7, 8 oder 9,
**dadurch gekennzeichnet, dass**
der Aufbewahrungszustand derart arretierbar ist, dass das Kinderwagengestell noch weiter zusammenfaltbar ist, wobei dazu vorzugsweise das zweite Riegelelement (27) und eine zugehörige Riegelaufnahme (37) derart, insbesondere asymmetrisch, konfiguriert sind, dass der Aufbewahrungszustand gegen ein Entfalten arretiert ist, gleichzeitig jedoch ein weiteres Zusammenfalten ermöglicht ist.

11. Faltbares Kinderwagengestell nach einem der vorhergehenden Ansprüche, **dadurch gekennzeichnet, dass**
der Schieberabschnitt (16) des Schiebers zur Höhenverstellung eines Griffes verschwenkbar ist, insbesondere in verschiedenen Schwenkpositionen arretierbar ist, wobei eine Arretierung und/oder ein Lösen der Arretierung des Gebrauchszustandes und/oder des Aufbewahrungszustandes durch Verschwenkung des verschwenkbaren Schieberabschnittes (16) erfolgt.

12. Faltbares Kinderwagengestell nach einem der vorhergehenden Ansprüche, **dadurch gekennzeichnet, dass**
der verschwenkbare Schieberabschnitt (16) in mindestens zwei, vorzugsweise mindestens drei Schwenkstellungen arretierbar ist und/oder dass der verschwenkbare Schieberabschnitt gegenüber einem weiteren Schieberabschnitt verschwenkbar ist.

13. Faltbares Kinderwagengestell nach einem der vorhergehenden Ansprüche, **dadurch gekennzeichnet, dass**
das Kinderwagengestell so konfiguriert ist, dass ein Lösen der Arretierung des Gebrauchszustandes entweder durch zwei verschiedene Betätigungsschritte, die gleichzeitig durchgeführt werden, oder durch drei aufeinanderfolgende Betätigungsschritte erfolgen kann, wobei das Kinderwagengestell mindestens eine Einstellmöglichkeit aufweist, durch die mindestens zwei verschiedene Gebrauchspositionen eingestellt werden können, wobei mindestens eine weitere Position, nämlich eine Entriegelungsposition eingenommen werden kann, in der die Arretierung des Gebrauchszustandes gelöst ist bzw. wird.

14. Faltbares Kinderwagengestell nach einem der vorhergehenden Ansprüche, **dadurch gekennzeichnet, dass**
das Kinderwagengestell so konfiguriert ist, dass ein Verschwenken des verschwenkbaren Schieberabschnittes (16) in eine Schwenkstellung, bei der eine Arretierung und/oder ein Lösen der Arretierung des Gebrauchszustandes und/oder des Aufbewahrungszustandes erfolgt, nur nach vorheriger oder nur nach gleichzeitiger, also während des Verschwenkvorgangs erfolgender, Betätigung einer Sicherungseinrichtung, insbesondere eines Knopfes, vorzugsweise an einem horizontalen Abschnitt des Schiebers, eingenommen werden kann.

15. Kinderwagen, insbesondere Kindersportwagen, Buggy oder dgl. Fahrzeug für Kinder, aufweisend ein Kinderwagengestell nach einem der vorhergehenden Ansprüche.

## Claims

1. Foldable perambulator frame, in particular pushchair frame, buggy frame or similar vehicle frame for children, wherein the perambulator frame is equipped with wheels and with a pusher (11) for pushing the perambulator frame, wherein the perambulator frame can be brought into at least one locked state of use and into at least one folded, locked state of storage, wherein an actuating device (16), in particular a manual actuating device, is provided and is designed in such a way that at least two locking operations are carried out during a transfer from the locked state of use to the locked state of storage, namely both a release of the locking in the state of use and an adjustment of a locking in the state of storage by a single first actuation of the actuating device (16), **characterized in that**, during a transfer from the locked state of storage to the locked state of use, one locking operation, namely a release of the locking in the state of storage, is carried out by a single second actuation of the actuating device (16), wherein the second actuation is preferably an actuation without reversal of movement and/or wherein the second actuation preferably represents a kinematic reversal of the first actuation.

2. Foldable perambulator frame according to claim 1, **characterized in that** the first actuation is an actuation without reversal of movement.

3. Foldable perambulator frame according to claim 1 or 2, **characterized in that** the actuating device (16) is configured in such a way that the first actuation entails that the release of the locking in the state of use and the setting of the locking in the state of storage occurs overlapping in time at least in sections, in particular takes place simultaneously, or takes place one after the other in time.

4. Foldable perambulator frame according to one of the preceding claims, **characterized in that** the actuating device (16) is pivotable for carrying out the first and/or second actuation.

5. Foldable perambulator frame according to one of the preceding claims, **characterized in that** the actuating device (16) is a component of the pusher (11) and/or is a bar, in particular a pusher bar, and/or is a lever and/or is a flap and/or **in that** at least one pusher section (16) of the pusher can be pivoted for adjusting the height of a handle, in particular can be locked in various pivot positions.

6. Foldable perambulator frame according to one of the preceding claims, **characterized in that** the actuating device (16) interacts with an adjusting device (20), preferably via a pulling element, in particular a Bowden cable, wherein the adjusting device (20) is adjustable into at least a first and a second position, wherein the state of use is locked in the first position and/or a locking of the state of storage is released in the first position and/or wherein the state of storage is locked in the second position and/or a locking of the state of use is released in the second position.

7. Foldable perambulator frame according to claim 6, **characterized in that** the adjusting device (20) comprises a first active transmission device, in particular a first guide bevel (23), in such a way that a first latch element (26), when transferred from the first position to the second position in the state of use, is moved from a latch receptacle (30a, 30b) in particular against the action of a tensioning device, preferably a second spring (31a, 31b), and/or the adjusting device (20) comprises a second active transmission device, in particular a second guide bevel (24), in such a way that a second latch element (27) is moved into a latch receptacle during a transfer from the first position to the second position in the storage state, in particular against the action of a tensioning device, preferably a fourth spring (35).

8. Foldable perambulator frame according to claim 7, **characterized in that** the first or the second latch element is moved axially and the other latch element is moved radially.

9. Foldable perambulator frame according to claim 7 or 8, **characterized in that** the second latch element (27) has at least two latch element parts (28, 29) which can be moved relative to one another, wherein a tensioning device, in particular a third spring (31), is provided between the latch element parts (28, 29) in such a way that the tensioning device forces the latch element parts (28, 29) apart.

10. Foldable perambulator frame according to claim 7, 8 or 9, **characterized in that** the state of storage can be locked in such a way that the perambulator frame can be folded even further, wherein the second latch element (27) and an associated latch receptacle (37) are preferably configured for this purpose, in particular asymmetrically, in such a way that the state of storage is locked against unfolding, but at the same time further folding is made possible.

11. Foldable perambulator frame according to one of the preceding claims, **characterized in that** the pusher section (16) of the pusher is pivotable for height adjustment of a handle, in particular is lockable in various pivot positions, wherein locking and/or releasing of the locking of the state of use and/or the state of storage is carried out by pivoting the pivotable pusher section (16).

12. Foldable perambulator frame according to one of the preceding claims, **characterized in that** the pivotable pusher section (16) can be locked in at least two, preferably at least three pivot positions and/or **in that** the pivotable pusher section can be pivoted relative to a further pusher section.

13. Foldable perambulator frame according to one of the preceding claims, **characterized in that** the perambulator frame is configured in such a way that the locking of the state of use can be released either by two different actuating steps which are carried out simultaneously or by three successive actuating steps, wherein the perambulator frame has at least one adjustment option by means of which at least two different positions of use can be set, wherein at least one further position, namely an unlocking position, can be assumed in which the locking of the state of use is or will be released.

14. Foldable perambulator frame according to one of the preceding claims, **characterized in that** the perambulator frame is configured in such a way that a pivoting of the pivotable pusher section (16) into a pivoting position, in which a locking and/or a release of the locking of the state of use and/or the state of storage takes place, can only be assumed after prior or only after simultaneous, i.e. during the pivoting process, actuation of a securing device, in particular a button, preferably on a horizontal section of the pusher.

15. Perambulator, in particular pushchair, buggy or similar vehicle for children, comprising a perambulator frame according to one of the preceding claims.

## Revendications

1. Châssis de voiture d'enfant pliable, en particulier châssis de poussette, châssis de buggy ou châssis de véhicule similaire pour enfant, lequel châssis de voiture d'enfant est muni de roues et d'un guidon (11) pour pousser le châssis de voiture d'enfant, lequel châssis de voiture d'enfant peut être amené dans au moins un état d'utilisation bloqué et dans au moins un état de rangement plié et bloqué, un dispositif d'actionnement (16), en particulier manuel, étant prévu et conçu de telle manière que, lors du passage de l'état d'utilisation bloqué à l'état de rangement bloqué, au moins deux opérations de blocage, à savoir le déblocage de l'état d'utilisation et l'établissement d'un blocage dans l'état de rangement, sont exécutées par un seul premier actionnement du dispositif d'actionnement (16), **caractérisé en ce que**, lors d'un passage de l'état de rangement bloqué à l'état d'utilisation, une opération de blocage, à savoir un déblocage de l'état de rangement, est effectuée par un seul deuxième actionnement du dispositif d'actionnement (16), le deuxième actionnement étant de préférence un actionnement sans inversion du mouvement et/ou le deuxième actionnement étant de préférence une inversion cinématique du premier actionnement.

2. Châssis de voiture d'enfant pliable selon la revendication 1, **caractérisé en ce que** le premier actionnement est un actionnement sans inversion du mouvement.

3. Châssis de voiture d'enfant pliable selon la revendication 1 ou 2, **caractérisé en ce que** le dispositif d'actionnement (16) est configuré de telle façon que le premier actionnement a pour conséquence que le déblocage de l'état d'utilisation et l'établissement du blocage de l'état de rangement coïncident au moins en partie dans le temps, en particulier ont lieu simultanément ou ont lieu l'un après l'autre dans le temps.

4. Châssis de voiture d'enfant pliable selon l'une des revendications précédentes, **caractérisé en ce que** le dispositif d'actionnement (16) peut pivoter pour exécuter le premier actionnement et/ou le deuxième.

5. Châssis de voiture d'enfant pliable selon l'une des revendications précédentes, **caractérisé en ce que** le dispositif d'actionnement (16) fait partie du guidon (11) et/ou est un étrier, en particulier un étrier de guidon et/ou un est un levier et/ou un clapet et/ou **en ce que** l'au moins une partie de guidon (16) du guidon peut pivoter pour le réglage en hauteur d'une poignée, en particulier peut être bloquée dans différentes positions de pivotement.

6. Châssis de voiture d'enfant pliable selon l'une des revendications précédentes, **caractérisé en ce que** le dispositif d'actionnement (16) coopère avec un dispositif de déplacement (20), de préférence par l'intermédiaire d'un élément de traction, en particulier d'un câble Bowden, le dispositif de déplacement (20) pouvant être ajusté dans au moins une première position et une deuxième, l'état d'utilisation étant bloqué dans la première position et/ou un blocage de l'état de rangement étant débloqué dans la première position et/ou l'état de rangement étant bloqué dans la deuxième position et/ou un blocage de l'état d'utilisation étant débloqué dans la deuxième position.

7. Châssis de voiture d'enfant pliable selon la revendication 6, **caractérisé en ce que** le dispositif de déplacement (20) comprend un premier dispositif de transmission de l'action, en particulier un biseau d'approche (23), de telle sorte qu'un premier élément de targette (26) est déplacé hors d'un logement de targette (30a, 30b) lors d'un passage de la première position à la deuxième position dans l'état d'utilisation, en particulier contre l'action d'un dispositif tendeur, de préférence de deuxièmes ressorts, (31a, 31b), et/ou
le dispositif de déplacement (20) comprend un deuxième dispositif de transmission de l'action, en particulier un deuxième biseau d'approche (24), de telle sorte qu'un deuxième élément de targette (27) est déplacé dans un logement de targette lors d'un passage de la première position à la deuxième position dans l'état de rangement, en particulier contre l'action d'un dispositif tendeur, de préférence de quatrièmes ressorts (35).

8. Châssis de voiture d'enfant pliable selon la revendication 7, **caractérisé en ce que** le premier ou le deuxième élément de targette est déplacé dans le sens axial et l'autre élément de targette dans le sens radial.

9. Châssis de voiture d'enfant pliable selon la revendication 7 ou 8, **caractérisé en ce que** le deuxième élément de targette (27) comprend au moins deux parties d'élément de targette (28, 29) mobiles l'une vers l'autre, un dispositif tendeur étant prévu entre les parties d'élément de targette (28, 29), en particulier des troisièmes ressorts (31), de telle façon que le dispositif tendeur écarte les parties d'élément de targette (28, 29) l'une de l'autre.

10. Châssis de voiture d'enfant pliable selon la revendication 7, 8 ou 9, **caractérisé en ce que** l'état de rangement peut être bloqué de telle manière que le châssis de voiture d'enfant puisse être encore plus replié, ce pour quoi le deuxième élément de targette (27) et un logement de targette (37) correspondant sont configurés, de préférence asymétriques, de telle manière que l'état de rangement soit bloqué pour empêcher un déploiement, mais qu'il soit possible de pousser encore le pliage.

11. Châssis de voiture d'enfant pliable selon l'une des revendications précédentes, **caractérisé en ce que** la partie de guidon (16) du guidon peut pivoter pour le réglage en hauteur d'une poignée, en particulier peut être bloquée dans différentes positions de pivotement, un blocage et/ou un déblocage de l'état d'utilisation et/ou de l'état de rangement étant réalisés par le pivotement de la partie de guidon (16) pivotante.

12. Châssis de voiture d'enfant pliable selon l'une des revendications précédentes, **caractérisé en ce que** la partie de guidon (16) pliable peut être bloquée dans au moins deux, de préférence au moins trois positions de pivotement et/ou **en ce que** la partie de guidon pivotante peut pivoter par rapport à une autre partie de guidon.

13. Châssis de voiture d'enfant pliable selon l'une des revendications précédentes, **caractérisé en ce qu'**il est configuré de telle manière que le déblocage de l'état d'utilisation soit exécuté soit en deux étapes d'actionnement différentes effectuées simultanément, soit en trois étapes d'actionnement successives, le châssis de voiture d'enfant comportant au moins une possibilité de réglage par laquelle les au moins deux positions d'utilisation différentes peuvent être réglées, au moins une position pouvant être prise, à savoir une position de déverrouillage dans laquelle l'état d'utilisation est ou devient débloqué.

14. Châssis de voiture d'enfant pliable selon l'une des revendications précédentes, **caractérisé en ce que** le châssis de voiture d'enfant est configuré de telle manière qu'un basculement de la partie de guidon (16) pivotante dans une position dans laquelle l'état d'utilisation et/ou l'état de rangement sont bloqués et/ou débloqués ne peut être effectué qu'après l'actionnement préalable ou seulement après l'actionnement simultané, c'est-à-dire pendant l'opération de pivotement, d'un dispositif de sûreté, en particulier d'un bouton, de préférence sur une partie horizontale du guidon.

15. Voiture d'enfant, en particulier poussette, buggy ou véhicule similaire pour enfant, comportant un châssis de voiture d'enfant selon l'une des revendications précédentes.
